# EUROPEAN PATENT APPLICATION

(11) **EP 2 544 117 A1**
(43) Date of publication of application: **09.01.2013**
(21) Application number: 11305893.7
(22) Date of filing: 08.07.2011
(51) Int. Cl.: G06F 21/00

(54) **Method and system for sharing or storing personal data without loss of privacy**

(71) Applicant: Gemalto SA, 92190 Meudon (FR)
(72) Inventor: Gouget, Aline, 75016 PARIS (FR); Lambert, Jean-Marc, 78530 BUC (FR)

(57) **Abstract**

The present invention relates to a method and system for preserving a user's privacy and control on the documents while sharing or storing said documents. The invention follows the principle of "privacy-by-design" by defining a separation of duties such that the user can distribute his confidentiality of Personal Identifiable Information and the data to be protecting over several service providers instead of focusing this information on a single service provider. For that the personal information to be protected is divided and stored in at least three services providers:
- Data storage provider which stores encrypted documents but it does not know the secret keys,
- Trusted Service provider which stores or computes the secret keys but it should not have access to the encrypted documents, and
- Authorization manager which should have a description of documents linked to an authorization policy. It should not have access to the secret keys.

## Description

### Field of the Invention

The present invention relates generally to a method and system for preserving a user's privacy and control on the user's data while sharing or storing said data.

The invention follows the principle of "privacy-by-design" by defining a separation of duties such that the user can distribute his confidentiality of Personal Identifiable Information over several service providers instead of focusing this information on a single service provider.

### Description of the Prior Art

Today, the costs for building and maintaining a private storage infrastructure are not negligible. Customers may prefer to opt for a simpler and less expensive solution by moving their data to the service providers or cloud providers. Therefore, creating and sharing documents online and access them from anywhere and from any device like computer or smart phone are in common use today. Lots of service providers or cloud providers offer an online database to store and share these documents and manage directly backups.

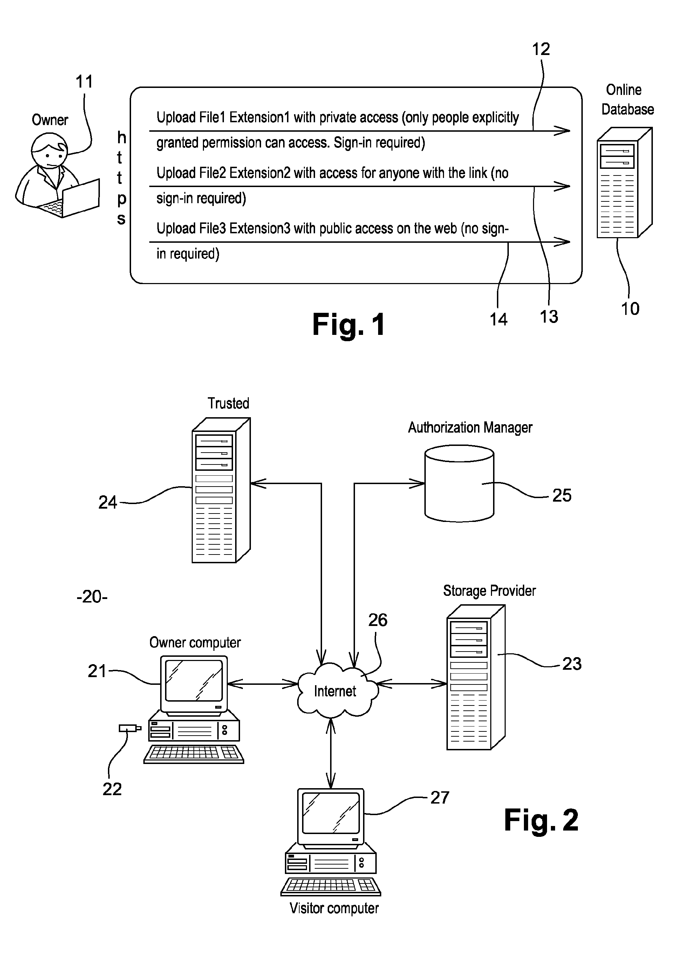

The FIG.1 shows the sharing setting generally provided with the database web service. During the upload of a document into the database 10, the document owner sets viewing and editing permissions for others.

The owner can set the document, File1.Extension1, to private, as illustrated by the reference 12. In this case, the access to this document is limited to people to whom the owner give permission. Therefore, the document is shared with specific people; the document owner can allow those people to edit and view the document, or simply to view it.

The owner can as well allow anyone to view his document, named here File2.Extension2, if he knows the unique URL or web address where that document will be able to see it, as illustrated by the reference 13. The owner can also allow anyone to edit.

The owner 11 can also allow the world to view his document, named File3. Extension3, but not edit it, by publishing it as a web page, as illustrated by the reference 14.

The owner 11 can easily access of the database 10 web service and manage their documents in one location online.

When the owner signs up for a database account, he must provide personally identifiable information to the service or cloud provider. The administrator will have access to the account information including email and sensitive personal information of the owner 11. All the cloud storage providers guarantee that the personal data provided by the owner will remain confidential.

However, the main problem is the threat of access to personal information and personal documents by a malicious employee of the service or cloud provider. Whatever the policy chosen by the owner 11, the provider has access to the owner's personal information and to the documents (File1.Extension1, File2.Extension2, File3.Extension3,...) of the owner, even if the provider guarantees that owner's personal information and files are encrypted with provider keys.

In the cloud, the potential for malicious employee data is very real. The lack of transparency into provider processes and procedures, can lead to big vulnerabilities. For example, a cloud provider may not reveal how it grants employees access to physical or virtual data, how it monitors those employees, or how they analyze reports on compliance. This can make the cloud even more attractive for hacker hobbyists, corporate espionage, and even nation-state sponsored intrusion.

To overcome this problem, the owner 11 may store encrypted documents (instead of plaintext document) into an online database of a provider. When the owner 11 wants to share data with a visitor, he has to transmit to his visitor the information to get the encrypted document, secret key need to decrypt this document and if necessary an authentication mechanism . That secret key is provided by the owner 11 to ensure that data is kept secure from unauthorized access. The problem with this solution is how the owner can transmit the secret key to the visitor in a secure way while maintaining the same level of control on data access.

In view of the foregoing, a system and method for storing and sharing document into an online database without loss privacy would be desirable. Such system and method should be relatively easy to implement and use, require a minimal investment of resources, and provide a high level of security of the owner's personal information and data.

### Brief summary of the invention

The following presents a simplified summary in order to provide a basic understanding of some aspects of the disclosed embodiments. This summary is not an extensive overview and is intended to neither identify key or critical elements nor delineate the scope of such embodiments. Its purpose is to present some concepts in a simplified form as a prelude to the more detailed description that is presented later.

In accordance with one or more embodiments and corresponding disclosure thereof, various aspects of the present invention provide a method destined to strengthen both privacy and user control on data sharing/storage services.

The invention provides a privacy-protecting system for secure storage and sharing of personal data by mainly focusing on user convenience while providing a high level of security by placing the user at the center of the architecture. The user convenience is a key point to enable the adoption by the general public of a new service built on top of a public cloud infrastructure.

For that, the solution of the invention is able to mitigate access to user data by reducing the level of trust the user needs to give to the cloud storage provider while preserving the level of confidentiality/privacy.

The level of trust is reduced, according to the invention, by separating the personal information from multiple service providers and to gain personal control over one's information. For that the personal information to be protected is divided and stored in at least three services providers:
- Data storage provider which stores encrypted documents but it does not know the secret keys. The information on the user known by the data storage provider is only the identity of the owner. It does not have access to the plaintext data.
- Trusted Service provider which stores or computes the secret keys but it should not have access to the encrypted documents. It can log the access requests to the secret keys.
- Authorization manager which should have a description of documents linked to an authorization policy. It should not have access to the secret keys and encrypted documents.

In addition, this solution strengthens the access control to data by the owner by providing him personal control:
- data sharing with access policy defined by the owner himself,
- data storage for own use only. In this case, the trusted service provider does not have the capability to compute the decryption key. The owner encrypts and decrypts the data by using only its personal key,
- data storage with key recovery by the decryption key computed by the trusted service provider.

The owner makes a choice for each document and he can change his choice of option at any time.

The present invention was made in view of the foregoing points. Thus, an object of the invention is to propose a file sharing system and a file sharing method for:
- protecting the privacy information of owners without hampering convenience when the owner is to process files in the online files storage,
- for sharing data among a plurality of visitor via the online storage while protecting the data to unauthorized access.

The security properties provided by the invention are the followings:
- Confidentiality: the cloud storage provider does not learn any information about plaintext data;
- Integrity: any unauthorized modification of owner data by the cloud storage provider can be detected by said owner;
- Non-repudiation: any access to owner data is logged;
- Availability: owner data is accessible from any machine and at all time;
- Reliability: owner data is reliably backed up;
- Data sharing: owner can share their data with trusted parties.

In order to achieve the foregoing objects, the present invention provides a method protecting the privacy information of owners providing private storage of data within a network to a owner operating a terminal connected to said network, there being available to said owner terminal on said network a data storage provider to provide storage services, said method comprising :
- encrypting the data with a first derived key KDocOwner from a master private key MKprivate, said master private key being only known by the owner, said first derived key being unique for each data to be encrypt,
- storing said encrypted data into a database under the control of said data storage provider,
- generating a master public key MKshared shared between the owner terminal and a trusted service provider available on said network,
- the first derived key KDocOwner is encrypted with a second derived key KDocVisitor from the shared master public key MKshared to provide a data token C1 stored in the data storage provider database, said first derived key being unique for each data to be encrypt,
- said trusted service provider being able to calculate said second derived key KDocVisitor from the master public key allowing to retrieve the first derived key,
- defining visitors access policy of the encrypted data into an authorization manager available on said network,
- the authorization manager, the data storage provider and the trusted service provider being physically and functionally independent to each other.

To the accomplishment of the foregoing and related ends, one or more embodiments comprise the features hereinafter fully described and particularly pointed out in the claims.

### Brief description of the drawings

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
FIG. 1 already described, schematically illustrate a prior art system to store and share over the Internet.
FIG.2 is a block diagram showing an example of a system architecture employed in connection with an embodiment of the invention.
FIG.3 to FIG.5 illustrate the process through which documents are shared while preserving the privacy of the owner and the control on the owner's data according to one embodiment of the present invention.

### Detailed description of the invention

The present invention will now be described in detail with reference to a few preferred embodiments as illustrated in the accompanying drawings. In the following description, numerous specific details are set forth in order to provide a thorough understanding of the present invention. It will be apparent, however, to one skilled in the art, that the present invention may be practiced without some or all of these specific details.

In other instances, well known structures, devices or algorithms have not been described in detail so not to unnecessarily obscure the present invention.

In the drawings, like or similar elements are designated with identical reference numerals throughout the several views. The depicted lines between the elements represent connections between these elements. The arrows represent connections wherein a direction of a message from one element to another element is shown. The term connection can refer to a functional connection and not necessary to a physical connection.

It may be recalled that, in the description, when an action is attributed to a microprocessor, an application or to a device comprising a microprocessor, this action is performed by the microprocessor controlled by instruction codes recorded in a memory of this device.

FIG.2 is a block diagram of an exemplary embodiment of a system 20. As illustrated, system 20 comprises an owner terminal 21 which can be any general purpose and/or special purpose computer, such as a personal computer, workstation, minicomputer, laptop, Personal Digital Assistant (PDA), mobile terminal, Bluetooth device, communicator, "smart" phone, cellular telephone, or the like, etc. In general any device on which resides a finite state machine capable of implementing at least a portion of a method of the invention. This embodiment of a terminal 21 also contains a token reader (not illustrated). Alongside the token reader, there is illustrated a portable token 22 including smart card used as a seed to generate keys to protect Personal Identifiable Information of the owner over several service providers as shall be described further below. The portable token is also able to store and manage secret keys. In the embodiment illustrated in FIG.2 the portable token 22 is USB key. In a variant embodiment the portable token 22 can be a MMC or SD cards, etc.

In an embodiment, the portable token 22 can be a client application downloaded into the terminal 21 and which is suitable to perform all the tasks of said portable token during the execution of this invention.

Personal Identifiable Information comprises notably sensitive personal information of the owner, identifier information of the owner, numerical data to be protected, email and so on.

The terminal 21 can include well-known components such as one or more network interfaces, one or more processors, one or more memories containing instructions, and/or one or more input/output (I/O) devices, etc.

The network interfaces allow the owner terminal 21 to communicate with one or more remote agents like a data storage provider (SP) 23, a trusted service provider (TSP) 24 and an authorization manager (AM) 25 via a network 26. For example, the network interface may comprise an Ethernet controller, a cable modem, a digital subscriber line (DSL) modem, various wireless communication methods etc. to couple the terminal 21 to the one or more remote agents via the network 26 that is here Internet.

The data storage provider 23 comprises database to store owner's encrypted documents but it does not know the secret keys encrypting these documents. The only information on the owner known by the data storage provider 23 is his identity named Owner-ID. The document can be any kind of numerical data that the owner would like to protect. The SP does not require to know the AM or the TSP.

The authorization manager (AM) 25 manages a database of information such as an identity of the document to be protected linked to the authorization policy. It should not have access to the secret keys generated by the token 22 and to the encrypted documents.

In an embodiment, the AM 25 is managed at the side of the owner. For example, the AM can be a server or a terminal available on the local network of the owner and available on Internet.

The AM 25 makes access decisions based on owner policy. The AM is assumed to create an access token only if the access request is compliant with the owner policy. Any access token request can be logged by the AM.

For each document, the AM has to store the identifier Doc-ID and a location Rl_{Data} of the data token C1 described below. The AM does not have the capability to decrypt C1, i.e. it does not have the knowledge of the corresponding secret key KDocVisitor. The AM thus cannot access to the location of the encrypted document EncDoc. Anyway, if the AM discovers the location of the EncDoc, then the AM does not have the capability to decrypt EncDoc, i.e. it does not have the knowledge of the corresponding secret key KDocOwner. Then AM cannot recover the plaintext of the document.

The trusted service provider (TSP) 24 is able to store or compute the secret keys generated by the token 22 but it should not have access to the encrypted documents. Indeed, the TSP has no information on the localization of the encrypted files, i.e. TSP does not have access to both the links RI_{EncDoc} and Rl_{Data} associated to said document. The TSP 24 is responsible to check the validity of an access token, can deliver the corresponding secret key (in case the access token is valid). The TSP 24 can log the access requests to the secret keys.

If the SP requests an access token to the AM, then the AM will reject the request (unless the owner has authorized the SP through the AM to access the protected data). If the SP requests a secret key to the TSP without a valid access token, then the TSP will reject the request.

A single data storage provider 23, TSP 24 and AM 24 are illustrated for sake of clarity. The embodiments described here with only three service providers, one SP, one AM and one TSP, provide the basis of the invention, knowing that each Personal Identifiable Information of the owner which is managed by one of those service provider above cited can be separated respectively on another service providers (one or more) offering the same services.

As illustrated, system 20 comprises also a visitor terminal 27 which can be like the owner terminal 21. The visitor terminal 21 is connected through the network 26, to the data storage provider 23, the trusted service 24 and the authorization manager 25, to access to the documents shared by the owner as described below.

In the following description, it is assumed that (strong or not) identification/authentication between the owner terminal 21 and/or the visitor terminal 27 and the SP, the TSP and/or the AM, has occurred and won't be described in detail. The identification/authentication mechanism can be done for example by login/password through https, P2P authentication, or secure channel between the entities and so on.

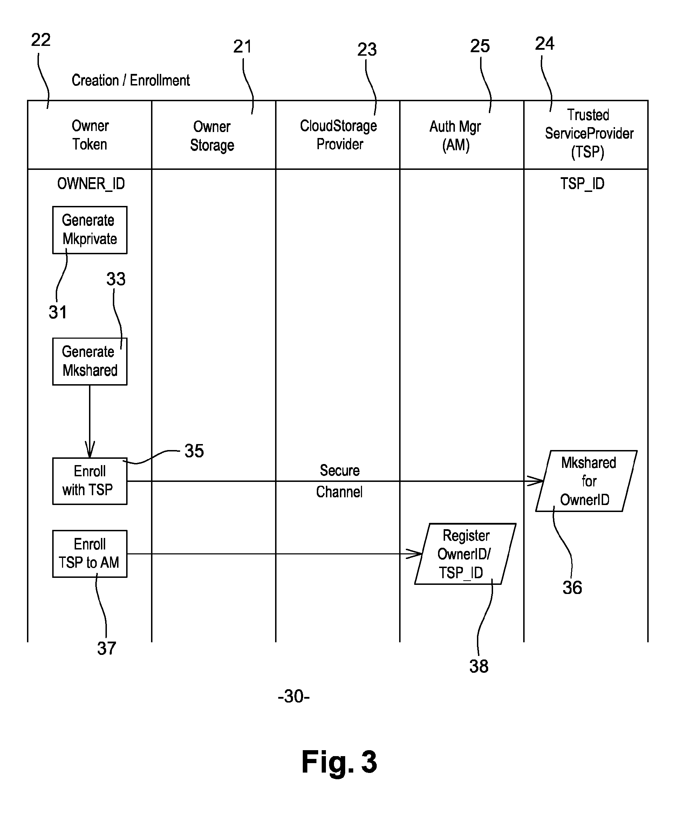

With reference now to FIG. 3, illustrated is an exemplary owner registration and enrolment processing flow 30. On a first step, the portable token 22 communicates with the TSP 24 over a secure channel (like SSL or TSL) for the purpose of mutual registration and enrolment. After this enrolment, the identity of the owner named Owner-ID associated with the identity of the TSP named TSP-ID are stored into the database of the portable token 22 and the TSP 24.

In the description, the identity ID is a symbol that will uniquely identify the corresponding element. In a preferred embodiment, the identity ID is a numeric identity.

In an embodiment, this Owner-ID is generated and provided by the trusted service provider (TSP) 24 to the portable token 22. In this case, the TSP 24 generates a unique Owner-ID linked to the real (physique) identity of the owner's portable token 22. This generation can be doing randomly or based on identifier information of the owner. The generated Owner-ID is typically routed directly to the portable token 22 from the TSP 24.

In a variant embodiment, the Owner-ID is generated by the portable token 22. In this case, the portable token 22 shares with the TSP 24 the Owner-ID in a secure manner based, for example, on a mutual authentication between the portable token 22 and the TSP 24. The TSP 24 compares the received Owner-ID against these stored to find the one that matches and therefore sends a request to the portable token for a new Owner-ID. Whereas, the Owner-ID is stored in the TSP 24 database like the identity of the owner's portable token 22.

In a variant, the owner-ID corresponds to the identity of the portable token named token-ID which is unique and is associated to said portable token during a personalization phase of the smart card of said portable token. In this case, the portable token 22 transmits to the TSP 24 its token-ID in a secure manner.

In a variant embodiment, the Owner-ID is generated by an administrator of the system 30 and transmitted in a secure manner to the portable token 22 and to the TSP 24 for storage.

During this registration and enrolment processing, the portable token 22 generates at step 31 and 33 a pair of secret master keys comprising respectively a master encryption and decryption key named Mkprivate and a master encryption and decryption key named Mkshared such that these keys are unique and immutable once activated.

In another embodiment, that pair of keys is generated by the portable token during the personalization phase of the smart card of said portable token.

Another embodiment is that the pair of master keys is generated outside the portable token 22, in secure environment with HSM (hardware security module), and stored into the smart card preferably during the personalization phase.

In a preferred embodiment, the portable token 22 is personalized with the secret master key Mkprivate. This master key Mkprivate should never leave the portable token 22. The secret and shared master key Mkpublic is generated by a key generator of the portable token 22 according to publicly known algorithm in the art.

At step 35, in an embodiment, a peer-to-peer authenticated secure channel is established between the portable token and the TSP before that said portable token sends to the TSP through the secure channel the master key MKshared and the identifier of the owner Owner-ID. Then at step 36, the TSP stores securely into its database the received Mkshared associated to the Owner-ID. In an embodiment, before the establishment of the secure channel the owner is identified by its portable token using for example a PIN verification method.

At step 37, the portable token 22 communicates with the AM 25, preferably over a secure channel, for the purpose of enrolment of TSP to AM. For that, the portable token 22 sends to the AM 25 the Owner-ID and the associated TSP-ID for registration at step 38.

At the end of the enrolment processing illustrated at FIG.3, Personal Identifiable Information of the owner is divided and stored into the portable token 22, the AM 25 and the TSP 24 such as to gain personal control over one's information.

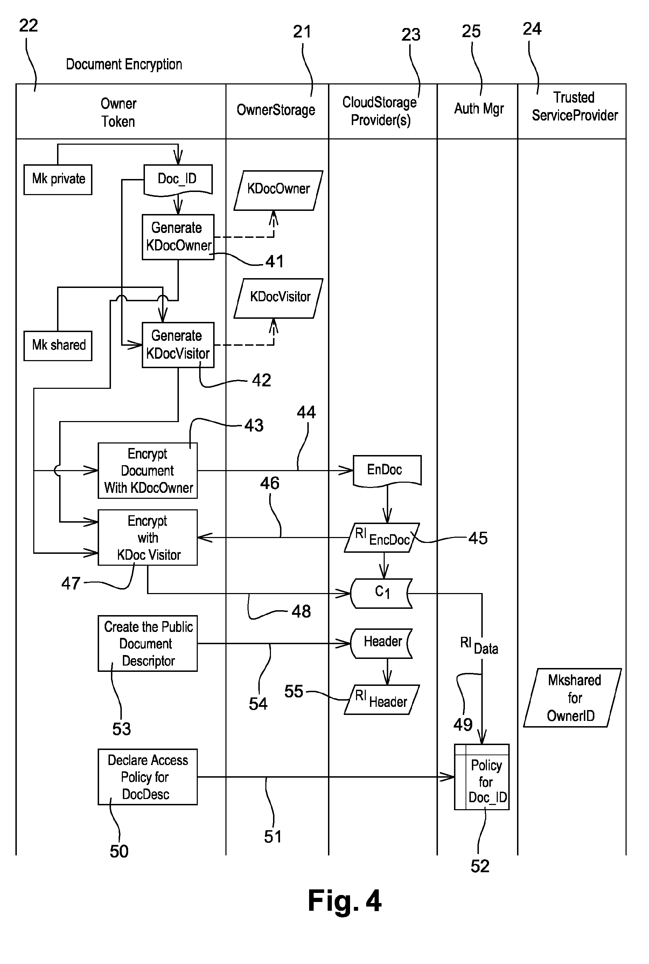

With reference now to FIG. 4, illustrated is an exemplary owner encryption document processing flow 40. For each document to be encrypted, the portable token 22 used the master keys generated at step 31 and 33 of FIG.3 for session key derivation. So that, in case of exposure of a derived key, only the document associated to that derived secret key is compromised.

At step 41, the portable token 22 involves a key derivation function (KDF) which derives a first secret key named KDocOwner from the master key Mkprivate. The algorithms of KDF are well known to those skilled in the art and not need to be described here. At step 42, the portable token 22 involves the KDF which derives a second secret key named KDocVisitor from the master key Mkshared.

In an embodiment, those derived keys are stored into the portable token. Thus, it is not required using the same terminal owner every time that the owner wants to upload new documents to the cloud or any time the owner wants to download a document. Indeed, the owner can easily change his connectivity device since the decryption/encryption keys are either computed by the portable token or by the TSP.

In an embodiment, the KDF derives those derived keys from the master key and the identity of the document to be protected named Doc-ID.

The Doc-ID can be entered by the owner on the terminal 21 or randomly generated by the portable token 22 or the terminal 21. The Doc-ID can also be generated by AM or TSP in order to ensure the unicity of this identifier for a given Owner-ID. In a preferred embodiment, the Doc-ID is generated according to a hash function. For example, we can have
Doc-ID= Hash(document to be protected; time;.....).

At step 43, the portable token 22 encrypts the document with the first secret key KDocOwner derived by the KDF based on a standard encryption algorithm. At the end of this encryption stage, we have an encrypted document named EncDoc.

At step 44, the owner terminal 21 establishes a communication (secure or not) with the SP 23. The owner can be identified by the data storage provider, for example using a login/password. The portable token 22 sends the encrypted document EncDoc to the SP 23.

In a preferred embodiment, the identification/authentication is mandatory to upload new data into the data storage provider 23. However, data can be downloading from the data storage provider 23, either using for example a login/password or directly with the knowledge of the resource identifier (URL link) of this data without identification/authentication.

At step 45, the SP 23 generates a first resource identifier RI_{EncDoc} destined to specify where the encrypted document is available and the mechanism for retrieving it. At step 46, the generated RI_{EncDoc} is sent to the owner (portable token 22 or terminal) over, preferably, a secure channel.

At step 47, the portable token 22 encrypts, based on standard encryption algorithm, the first secret key KDocOwner and the first resource identifier RI_{EncDoc} with the second secret key KDocVisitor to provide a data token C1. At step 48, the portable token 22 sends the data token C1 to the SP 23 for storage into its database over, preferably, a secure channel. Next, the SP 23 generates a second resource identifier Rl_{Data} destined to specify where the data token C1 is available and the mechanism for retrieving it. At step 49, the generated Rl_{data} is sent to the AM 25 over, preferably, a secure channel for registration.

In a preferred embodiment, the resource identifier is an URL.

At step 50, the owner defines access policy which specifies rights of access by many or as few people to the information set like the encrypted documents. The access policy defines exactly what level of access view and/or edit each person has on the owner's documents. The access policy defined is sent, at step 51, to the AM 25 for storage. The AM 25 includes, in the example embodiment, a database 52 (e.g., a relational database) within which are maintained information of people having access to the owner documents, in the form, in an example, of a access policy table linked to an authorization table. The access policy table stores the rights to view, to edit and eventually the number of access for each people that the owner want to grant the access to the document. The authorization table stores the second resource identifier Rl_{Data} linked to the description of the owner document like the Doc-ID and the identity of the users or the user profile authorized to access. The owner adds himself in the users authorized to access for key recovery.

Generally, the authorization manager has to manage on behalf of the owner a database of information such as a identity of the documents (Doc-ID) linked to an authorization policy under the control of the owner. The authorization manager can be for example as defined by Oauth or UMA. The owner or the visitor has a mean to be identified by the authorization manager, e.g. using a login/password or preferably with a more advanced identification/authentication method.

At step 53, a header comprising a document descriptor is generated. The header is a data structure containing a list of references on the encrypted document EncDoc, the owner and the trusted provider 24. This header can be entered by the owner on the terminal 21 or generated automatically by, preferably, the portable token 22. In an embodiment, the headers may include such information as, for example, Owner-ID, Doc-ID, and TSP-ID. At step 54, this header is sent to the SP 23.

At step 55, the SP 23 generates a third resource identifier RI_{Header} destined to specify where the header is available and the mechanism for retrieving it. This third resource identifier RI_{Header} can be sent to the owner. The owner shares this resource with any user having right of access to said document. In another embodiment, the resource RI_{Header}, is sent to the AM in order to make easy the management of the headers by the owner.

At the end of the encryption process illustrated at FIG.4, the SP 23 stores a header, a data token C1 and an encrypted document for each document to protect.

In an embodiment the derived secret keys are transmitted from the portable token to the owner terminal 21. These derived keys are stored locally on the owner terminal 21. In this case, the terminal comprises means (processors, memory, program....) to perform all the steps (43 to 51) executed by the portable token 22 as shown at FIG.4.

In a variant, at step 48, the portable token 22 sends the data token C1 to the AM 25 for storage into its database over, preferably, a secure channel. Next, the AM generates the second resource identifier Rl_{Data} destined to specify where the data token C1 is available and the mechanism for retrieving it.

In a variant, at step 54, the header is sent to the AM 25 which generates a third resource identifier RI_{Header} destined to specify where the header is available and the mechanism for retrieving it.

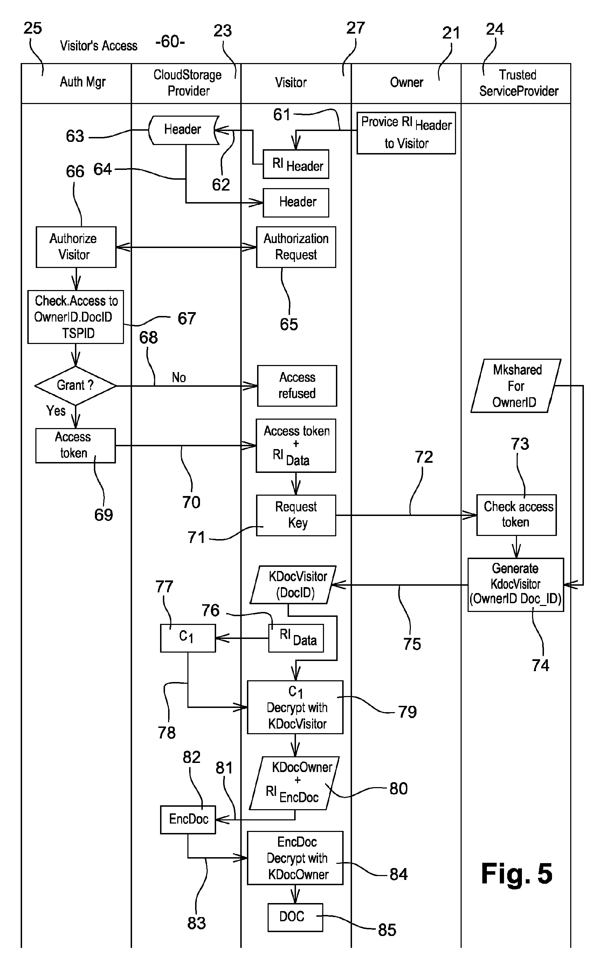

FIG. 5 illustrates a flowchart 60 of an exemplary method for a visitor (who can be the owner himself) to access to the owner document. At step 61, the owner addresses the third resource RI_{Header} to the visitors he grants access to the corresponding document. In another embodiment, the third resource RI_{Header} is provided by the AM upon request from the visitor.

At step 62, the visitor who want to access to the owner document causes the visitor terminal 27 to transmit a request for the information referenced by the linked RI_{Header} to the SP 23. At step 63, the SP 23 operates to parse the query received at the visitor terminal 27 and extract the header comprising the Owner-ID, the Doc-ID and the TSP-ID. At step 64, the SP 23 transmits the extracted header to the visitor terminal 27 in response to its query.

Some users can store the extracted header locally as "bookmarks," allowing the visitor to go directly to "bookmarked" pages without directly entering the link RI_{Header} or selecting this link on a transmitted page.

Next, an authorization phase of the visitor to access to the owner document is initiated by the visitor terminal 27. For that, the visitor terminal 27 sends an authorization request to the AM 25 so that to allow the AM 25 to verify that the visitor is indeed the registered user entitled to the content-sharing service as described above.

The authorization request can comprise notably identification information of the visitor and the header information (Owner-ID, the Doc-ID and the TSP-ID).

The visitor authorization process is carried out by AM 25, at step 66, on the basis of user identification information entered by the owner and stored in the authorization table. Specifically, a lookup is performed on the authorization table to determine whether any of the identification information provided by the visitor is included in this authorization table. If the identification information from the visitor matches identifications information stored in the authorization table, then the AM 25 checks, if the header information associated to the visitor identification information in the authorization table matches the information header entered by the visitor.

If the authorization process is successful, the authorization manager looks up, at step 67, the access policy right to extract the rights associated to the visitor identification information.

If the authorization process fails (visitor identification information or header information does not match) then the access and further service to the visitor are refused, at step 68.

If the authorization process is successful, then the AM 25 generates, at step 69, an access token. In a preferred embodiment, the access token dynamically generated is a unique identifier associated to the visitor during this authorization process. The access token is generated according to the well known generation algorithm.

The generation of the access token can be based on a variety of factors including, for example, the frequency of attribute change, the strength of cryptographic operations, the frequency of successful attacks, and the time to discovery and so on. In a preferred embodiment, the access token comprises a field indicating the allowable lifetime of this token.

In an embodiment, the access token comprises a signature under an AM secret key of at least the document identifier Doc-ID, the portable token identifier and a date of validity. The signature can be verified with a corresponding AM public key. In a variant, the access token can comprises a MAC value computed with a shared key between the AM and the TSP.

At step 70, the AM 25 sends in response to the authorization request from the visitor, the generated access token and the second resource identifier Rl_{Data}.

The terminal visitor 27 elaborates, at step 71, a request to receive from the TSP 24 the key KDocVisitor. This request comprises the extracted Owner-ID and Doc-ID from the header and the received access token. This request is sent to the TSP 24, at step 72, thank to the TSP-ID of the header. At step 73, the TSP 24 determines the validity of the received access token.

In a variant embodiment, at step 70, the AM 25 sends the second resource identifier Rl_{Data} to the visitor terminal and the request of the key KDocVisitor to the TSP 24. This request comprises the Owner-ID, the Doc-ID, the generated access token and the address of the visitor.

If the validation process of the access token is successful, the TSP 24 computes, at step 74, the key KDocVisitor from the master key Mkshared. Next, the key KDocVisitor is transmitted, at step 75, to the terminal visitor 27 by the TSP 24 in response to the request.

At step 76, the visitor who want to access to the owner document causes the visitor terminal 27 to transmit a request for the information referenced by the linked Rl_{Data} to the SP 23. At step 77, the SP 23 operates to parse the query received at the visitor terminal 27 and extract the data token C1. At step 78, the SP 23 transmits the extracted data token C1 in response to the request from the visitor terminal 27 at step 76. At step 79, the visitor terminal 27 decrypts, according to standard decryption algorithm, the data token C1 thank to the key KDocVisistor to retrieve, at step 80, the key KDocOwner and the first resource identifier RI_{EncDoc}.

At step 81, the visitor causes the visitor terminal 27 to transmit a request for the information referenced by the linked RI_{EncDoc} to the SP 23. At step 82, the SP 23 operates to parse the query received at the visitor terminal 27 and extract the encrypted document EncDoc. At step 83, the SP 23 transmits the extracted encrypted document EncDoc in response to the request from the visitor terminal 27, at step 81. At step 84, the visitor terminal 27 decrypts, according to standard decryption algorithm, the encrypted document EncDoc thank to the key KDocOwner to provide at the end the owner document at the step 85.

Anyone trying to access the encrypted document will have to know the second resource identifier Rl_{Data} destined to specify where the data token C1 is available and the mechanism for retrieving it and to belong to the users authorized to access to the said encrypted document.

In a variant embodiment, at step 47 of FIG.4, data token C1 is provided by encrypting the first resource identifier RI_{EncDoc} with the second secret key KDocVisitor. This embodiment is adapted for personal use of the owner documents. The visitor who received, at step 83, the encrypted document from the SP 23 in response to its query cannot decrypt it. If the owner wants to grant access to the corresponding document to visitors, he should address to the visitors the derived key KDocOwner from the portable token 22.

In another variant embodiment, at step 47 of FIG.4, the data token C1 comprises the first resource identifier RI_{EncDoc} in plaintext. In this case the resource Rl_{Data} and the resource identifier RI_{EncDoc} can be the same. This embodiment is also adapted for personal use of the owner documents. The visitor who received, at step 83, the encrypted document from the SP 23 in response to its query cannot decrypt it. If the owner wants to grant access to the corresponding document to visitors, he should address to the visitors the derived key KDocOwner from the portable token 22.

In an embodiment, no information on the documents is stored locally on the owner terminal or in the portable token. In this case, the resource identifier RI_{header} of the header and the resource Rl_{Data} of the data token C1 are accessible only through the AM. It is for the owner necessary to access a decryption key which can be delivered by the TSP to be able to find the localization of the encrypted file and to be able to decrypt it.

In another embodiment, the portable token may also stores the doc identifier Doc-ID and the second resource identifier Rl_{Data} in order to access directly to the data token without the need of requesting the AM.

The owner can always control exactly who has access to the encrypted document by modifying the access policy stored into the AM 25.

This overall mechanism guarantees privacy of owner by a separation of:
- the management of "storage",
- the management of "access control/policy" and
- the key management.

Moreover, this separation in the key management system allows also increasing the owner control on his data. Indeed, two master secret keys are generated by the owner device: one key is shared between the owner and the "Trust Service Provider" and one key is stored only on the owner device.

The method proposed by the invention permits the owner to encrypt the document either using only its personal key MKprivate (for personal use only, without key recovery) or using both MKprivate and MKowner keys (either for personal use with key recovery or to share with others). If the owner choices the first option, he can easily change his mind later by computing the key KDocOwner and by performing the step 47 to 52 of FIG.4. Therefore with the invention, it is no need to define at the storage encrypted document stage the access rights to visitors and to himself. Another advantage of the invention is the easy to change the SP 23 by another.

With the invention the owner can control through the authorization manager 25 (including himself for key recovery) the real-time update of the policy and the revocation. He also can reduce the impact of key exposure/ late revocation by associating one secret key KDocVisitor per document.

This proposed architecture can allow the owner to conveniently manage several levels of sensitivity for his personal data. For example, data highly sensitive can be decrypted only with the presence of the personal secure portable device, whereas data moderately sensitive can be accessed by the owner either with the personal secure device or through the TSP. The owner can share data moderately sensitive with other users through the AM and the TSP. Finally, non-sensitive data can be stored directly to the cloud data storage provider.

The management of two levels of sensitivity for the owner data m can be make according to the below example.
1. if m is a data moderately sensitive, then two ciphertext values are computed:
   EncDoc= Enc[KDocOwner](m)
   C1= Enc[KDocVisitor]( KDocOwner; RI_{EncDoc})
      where RI_{EncDoc} is for example the URL address to which EncDoc is stored and the encryption of the data m under the secret key KDocOwner is denoted by Enc[KDocOwner](m).
      In case 1, the TSP has the capability to compute the secret key KDocVisitor using Mkshared and Doc-ID. In this case, by using KDocVisitor it is possible to recover the secret key KDocOwner by computing:
      KDocOwner = Dec[KDocVisitor](C1), where the decryption of the data token C1 under the secret key KDocVisitor is denoted by Dec[KDocVisitor](C1).
      Then it becomes possible to recover the plaintext data m by computing m = Dec[KDocOwner](EncDoc).
      In case 1, the management of the access policy is done by the owner through the AM, both for him and for visitors. The download of data m moderately sensitive can be done without the portable token. In this case, the AM is necessarily involved in the protocol. Either the identifier of the document Doc-ID and the link URL Rl_{Data} is stored on the portable token itself, or the owner has to get this information from the AM.
      The download of data moderately sensitive is described according to three main steps:
      ● Step 1: the owner/visitor can be identified by the AM. The AM checks the compliance between the access request of the owner/visitor and the owner policy. If the owner/visitor access request matches the owner policy, then the AM transmits to the owner/visitor the link Rl_{header} where the header comprising Doc-ID is stored, the address Rl_{Data} where the data token C1 is stored and an access token to the decryption key of C1.
      ● Step 2: the owner/visitor gets the secret key KDocVisitor from the TSP by using the access token.
      ● Step 3: the owner/visitor gets the data token which is stored at the address RI_{Data}. Next it retrieves the plaintext value (KDocOwner; RI_{EncDoc}) = Dec[KDocVisitor](C1). The owner/visitor next gets the encrypted document EncDoc which is stored at the address RI_{EncDoc}.
      ● Step 4: the owner/visitor can decrypt EncDoc by using the secret key KDocOwner and then it recovers the plaintext m = Dec[KDocOwner](EncDoc).
2. if m is a data highly sensitive, then the computation of the data token C1 does not include the secret key KDocOwner:
   EncDoc= Enc[KDocOwner](m)
   C1= Enc[KDocVisitor](Ri_{EncDoc})

In case 2, the TSP has also the capability to compute the secret key KDocVisitor using Mkshared and Doc-ID. However, the knowledge of KDocVisitoris useless to decrypt the EncDoc. Indeed, the data token C1 does not contain the secret key KDocOwner. Only the Portable token has the capability to compute the secret key KDocOwner using Mkprivate and Doc-ID. Thus, only the portable token has the capability to decrypt EncDoc and to recover the plaintext m.

When the owner wants to download a document m highly sensitive, the involvement of his portable token is necessary. Either the identifier of the document Doc-ID and the link Rl_{Data} is stored on the portable token itself, or the owner has to get this information from the AM.

The download of data highly sensitive is described according to three main steps:
● Step 1: with the knowledge of Doc-ID, the portable token computes the two derived secret keys KDocOwner and KDocVisitor as described above.
● Step 2: the portable token gets the data token C1 stored at the address URL Rl_{Data} and retrieves the RI_{EncDoc} = Dec[KDocVisitor](C1). The portable token next gets the encrypted document EncDoc which is stored at the address URL Rl_{EncDoc}.
● Step 3: the portable token can decrypt EncDoc by using the secret key KDocOwner and then it recovers the plaintext m = Dec[KDocOwner]( EncDoc).

Note that, it is possible for the owner to change option and to move from option 2 to option 1 by adding the secret key KDocOwner in the message of the data token C1.

Note that, if the owner has lost his personal secure device, then the owner can still have access to data moderately sensitive due to the presence of the TSP. If the owner wants to also recover data highly sensitive in case of the lost of his secure device, then an additional key sequestration procedure should be done or a key-escrow mechanism may be established for decrypting highly sensitive data in case of the lost of the portable token.

The proposed data system for secure storage and sharing of personal data has been developed around the owner, for both security and ease-of-use.

## Claims

1. A method for providing private storage of data within a network to a owner operating a terminal connected to said network, there being available to said owner terminal on said network a data storage provider to provide storage services, said method comprising :
- generating a pair of secret master keys comprising a master encryption and decryption key named Mkprivate and a master encryption and decryption key named Mkshared, said master key Mkprivate being only known by the owner,
- encrypting the data with a first derived key KDocOwner from master private key MKprivate, said first derived key being unique for each data to be encrypted,
- storing said encrypted data into a database under the control of said data storage provider,
- providing a data token C1 comprising a generated resource identifier RI_{EncDoc}, specifying where the encrypted data is available,
- associating into a database of an authorization manager, available on said network, a generated resource identifier Rl_{Data} specifying where the data token C1 is available and an identity of the encrypted data Doc-ID,
- the authorization manager and the service provider being physically and functionally independent to each other.

2. Method as recited in claim 1, wherein
- the data token C1 is provided by encrypting the generated resource identifier RI_{EncDoc}, with a second derived key KDocVisitor from the master public key MKshared, said second derived key being unique for each data to be encrypted.

3. Method as recited in claim 2, wherein the data token is provided by encrypting the generated resource identifier RI_{EncDoc}, and the first derived key KDocOwner with the second derived key KDocVisitor.

4. Method as recited in claims 1 to 3, wherein defining visitors access policies of the encrypted data into the authorization manager are associated into the authorization manager database to the resource identifier Rl_{Data} of the data token.

5. Method as recited in claims 2 to 4, wherein
- the master key MKshared is sent from the owner terminal to a trusted service provider available on said network,
- said trusted service provider being able to calculate said second derived key KDocVisitor from the master key MKshared to retrieve the content of the data token,
- the trusted service provider is physically and functionally independent to the authorization manager and to the service.

6. Method as recited in claims 1 to 5, wherein the pair of master keys and the derived keys are generated by a portable token of the owner or by a client application downloaded into the owner terminal.

7. Method as recited in claims 1 to 6, wherein
- generating a header comprising the Doc-ID, owner identity and trusted service provider identity,
- generating a resource identifier RI_{Header} specifying where the header is available,
- sending said resource identifier RI_{Header} to any visitor having right of access to said encrypted data.

8. Method as recited in claim 7, wherein the data token C1, the header and/or the resource RI_{Header} are sent for storage to the data storage provider database, the authorization manager and/or the owner.

9. Method as recited in claim 7, wherein
- upon reception of a request comprising the resource identifier RI_{Header}, the data storage provider transmits the extracted corresponding header to the visitor,
- the visitor sends an authorization access request of the owner data to the authorization manager, said request comprising the visitor identifier information and the extracted header information,
- the authorization manager creates an access token only if the access request is compliant with the visitors access policy, sais access token being a unique identifier associated to the visitor,
- in response to the authorization access request, the visitor receives the generated access token and the resource identifier Rl_{Data} of the data token.

10. Method as recited in claim 9, wherein the access token comprises a signature with an authorization manager secret key verifiable with a corresponding authorization manager public key, a MAC value and/or a field indicating the allowable lifetime.

11. Method as recited in claims 9 to 10, wherein
- upon reception of a request of the second derived key KDocVisitor, the trusted service provider checks the validity of the received access token included into said request,
- the trusted service provider computes the second derived key KDocVisitor from the stored master public key MKshared and sent it to the visitor in response to the request,
- the extracted linked data token C1 is sent to the visitor upon reception of a request comprising the link resource identifier Rl_{Data,},
- the received data token is decrypted with the computed second derived key KDocVisitor to obtain the link resource identifier RI_{Encdoc} of the encrypted document,
- upon reception of a request comprising the resource identifier RI_{EncDoc}, the data storage provider transmits the extracted linked encrypted document to the visitor.

12. Method as recited in claim 11, wherein
- the extracted encrypted document is decrypted with either the first derived key KDocOwner stored by the owner or the first derived key KDocOwner retrieved from the data token.

13. A system for providing private storage of data within a network, according to the claim 1 to 12, comprising:
- an owner operating a terminal connected to said network,
- a data storage provider to provide storage services available to said owner terminal on said network, **characterized by**:
- the owner terminal comprises means to :
- generate a pair of secret master keys comprising a master encryption and decryption key named Mkprivate and a master encryption and decryption key named Mkshared, said master key Mkprivate being only known by the owner,
- encrypt the data with a first derived key KDocOwner from master private key MKprivate, said first derived key being unique for each data to be encrypted,
- send this encrypted data 1 to said data storage provider for storage,
- the system comprises means to
- provide a data token C1 comprising a generated resource identifier RI_{EncDoc}, specifying where the encrypted data is available,
- associate into a database of an authorization manager, available on said network, a generated resource identifier Rl_{Data} specifying where the data token C1 is available and an identity of the encrypted data Doc-ID, and wherein
- the authorization manager and the service provider being physically and functionally independent to each other.

14. System as recited in claim 13, wherein the means to generate master keys and the derivate keys are a portable token of the owner or a client application downloaded into the owner terminal.

15. System as recited in claims 13 to 14, wherein it comprises:
- a trusted service provider available on said network, said trusted service sharing the master public key MKshared with the owner terminal, said trusted service provider being able to calculate said second derived key KDocVisitor from the master public key to retrieve the content of the data token, and wherein the trusted service provider being physically and functionally independent to the authorization manager and the data storage provider.
